(19) Europäisches Patentamt

European Patent Office

Office européen des brevets

(11) **EP 0 909 495 B1**

(12) **FASCICULE DE BREVET EUROPEEN**

(45) Date de publication et mention
de la délivrance du brevet:
**25.08.2004 Bulletin 2004/35**

(21) Numéro de dépôt: **96920897.4**

(22) Date de dépôt: **05.06.1996**

(51) Int Cl.[7]: **H04L 9/30**, G06F 7/72

(86) Numéro de dépôt international:
**PCT/FR1996/000840**

(87) Numéro de publication internationale:
**WO 1997/047110 (11.12.1997 Gazette 1997/53)**

(54) **PROCEDE DE CRYPTOGRAPHIE A CLE PUBLIQUE**

KRYPTOGRAPHISCHES VERFAHREN MIT ÖFFENTLICHEM SCHLÜSSEL

PUBLIC KEY CRYPTOGRAPHY METHOD

(84) Etats contractants désignés:
**DE ES FR GB IT**

(43) Date de publication de la demande:
**21.04.1999 Bulletin 1999/16**

(73) Titulaire: **GEMPLUS**
**13881 Gémenos Cédex (FR)**

(72) Inventeurs:
  • **M'RAIHI, David**
    **F-75011 Paris (FR)**
  • **NACCACHE, David**
    **F-75009 Paris (FR)**

(56) Documents cités:
  • **PROCEEDINGS OF THE IEEE 1989 CUSTOM INTEGRATED CIRCUITS CONFERENCE (CAT. NO.89CH2671-6), SAN DIEGO, CA, USA, 15-18 MAY 1989, 1989, NEW YORK, NY, USA, IEEE, USA, pages 12.3/1-5, XP000075631 ROSATI T: "A high speed data encryption processor for public key cryptography"**
  • **ELECTRONICS LETTERS, 17 AUG. 1989, STEVENAGE UK, vol. 25, no. 17, ISSN 0013-5194, pages 1171-1172, XP000054000 JEDWAB J ET AL: "Minimum weight modified signed-digit representations and fast exponentiation"**
  • **ADVANCES IN CRYPTOLOGY - AUSCRYPT '92. WORKSHOP ON THE THEORY AND APPLICATION OF CRYPTOGRAPHIC TECHNIQUES PROCEEDINGS, GOLD COAST, QLD., AUSTRALIA, 13-16 DEC. 1992, ISBN 3-540-57220-1, 1993, BERLIN, GERMANY, SPRINGER-VERLAG, GERMANY, pages 447-456, XP000470453 SUNG-MING YEN ET AL: "The fast cascade exponentiation algorithm and its applications on cryptography"**

**Description**

La présente invention a pour objet un procédé de cryptographie dite à clé publique basé sur le logarithme discret faisant intervenir le calcul d'une grandeur modulo p.

Elle trouve une application dans la génération de signatures numériques de messages, dans une cession d'authentification entre deux entités ou dans le chiffrement de données.

Dans de telles procédures, la sécurité est fondée sur l'extrême difficulté qu'il y a à inverser certaines-fonctions et plus particulièrement le logarithme discret.

Ce problème consiste, étant donné la relation mathématique $y = g^x modulo p$ que l'on notera par la suite $y = g^x mod p$ (qui signifie y est le reste de la division de $g^x$ par p), à retrouver x lorsque l'on connaît p, g et y. Ce problème est impossible à résoudre, en l'état actuel des connaissances, dès que la taille p atteint ou dépasse 512 bits et que celle de x atteint ou dépasse 128 bits.

Dans de tels systèmes, il existe en général une autorité qui fournit le nombre p de grande taille, constituant le module. L'autorité choisit également un entier g, appelé base tel que l'ensemble engendré par g c'est-à-dire l'ensemble formé des nombres $g^x mod p$, pour x appartenant à l'intervalle [0, p-1] soit un sous-ensemble de taille maximale, au moins $2^{128}$.

Les paramètres p et g sont dits "publics" c'est-à-dire qu'ils sont fournis par l'autorité à tous les utilisateurs rattachés à cette autorité.

Selon certaines variantes, ces paramètres sont choisis individuellement par chaque utilisateur et font, dans ce cas, partie intégrante de sa clé publique.

Un inconvénient majeur à la mise en oeuvre de systèmes cryptographiques réside dans la nécessité d'avoir des moyens de calcul et de mémorisation relativement importants du fait des calculs complexes qui sont réalisés.

En effet, le calcul de la grandeur $g^k mod p$ consiste à réaliser des multiplications modulaires et cela est coûteux en temps de calcul et en place mémoire. Dans des dispositifs électroniques simples n'utilisant que des microprocesseurs standards, ce type d'opération n'est guère réalisable.

Pour des dispositifs électroniques possédant un processeur spécialisé pour ce type de calcul, il est malgré tout souhaitable de limiter, le temps de calcul et la place mémoire nécessaire pour les résultats intermédiaires.

En effet, le calcul de la grandeur $g^k mod p$ est en général relativement coûteux par la méthode classique du "carré-multiplié" connue sous l'abréviation anglosaxonne SQM (Square-Multiply) puisqu'il équivaut en moyenne à 3/2 $Log_2(p)$ multiplications.

Selon cette méthode on calcule toutes les puissances de g c'est à dire tous les carrés : $g^\circ$, $g^1$, $g^2 ... g^n$, lorsque k est de longueur n bits, puis on réalise les multiplications requises entre ces puissances ( par exemple $g^{17} = g^1.g^{16}$ ).

Selon la méthode du "carré multiplié" simple $g^k$ requiert n/2 multiplications et n carrés.

Dans le cas ou N signatures sont à fournir en une seule fois, on produit $Ng^k$, on réalise alors un calcul en parallele.

La méthode du "carré-multiplié" parallèle requiert N x n/2 multiplications et n carrés.

Une méthode proposée par E. BRICKELL et al. dénommée par l'abréviation BGKW permet de réduire le nombre de multiplications dans le cas de la méthode du carré-multiplié mais introduit un besoin de stockage de nombreuses constantes précalculées et donc la nécessité de disposer d'une quantité de mémoires de stockage très pénalisante.

L'introduction d'un calcul en parallèle de N valeurs dans cette méthode implique l'utilisation de nombreux registres pour conserver les résultats intermédiaires.

Cette méthode devient donc plus contraignante dans le cas où l'on se trouve dans une situation où il s'agit de générer un grand nombre de signatures en un temps très bref puisque dans ce cas le calcul en parallèle est introduit.

L'article de T.ROSALI intitulé "A high speed data encryption processor for public key cryptography" publié aux pages 12.3.1 à 12.3.5 dans Proceedings of the IEEE 1989 Custom Integrated Circuits Conference, San Diego, US, 15-18 Mai 1989, concerne une architecture matricielle spécifique pour la cryptographie mettant en oeuvre un microprocesseur utilisable par différents procédés cryptographiques aptes à réduire le nombre de bits à 1 dans les exposants. La vitesse d'exécution de calcul des exponentielles est augmentée tout en réduisant le poids de Hamming à 30.

La présente invention a pour objet de remédier à tous ces inconvénients. Elle permet d'apporter une solution souple et peu onéreuse en temps de calcul et en place mémoire à la mise en oeuvre d'algorithmes cryptographiques pour tous systèmes de cryptographie et en particulier par des appareils portables du type carte à puce à microprocesseur.

Selon un premier objet de l'invention, le procédé de cryptographie proposé permet de réduire le nombre de multiplications modulaires de façon telle que l'on obtienne des gains en temps de calcul de 15 à 40% et plus selon les schémas de cryptographie utilisés (Schnorr ou El Gamal).

Selon l'invention, deux solutions sont proposées afin de réduire le nombre de multiplications, l'une consistant à générer des exposants k "creux" avec peu de bits à 1, mais de longueur suffisante pour garder toute la sécurité au système, et l'autre consistant à réaliser les calculs des puissances de g en parallèle tout en combinant les exposants entre eux de manière à ne pas refaire deux fois le même calcul de puissance pour un exposant donné.

L'invention a plus particulièrement pour objet un procédé de cryptographie à clé publique basé sur le logarithme discret faisant intervenir le calcul de la grandeur $q^k$modp où p est un nombre premier appelé module, k un nombre aléatoire habituellement de longueur n bits et g un entier appelé base, dans lequel une entité E réalise des opérations d'authentification et/ou de signature et/ou de chiffrement, comprenant des échanges de signaux avec une autre entité dans lesquels intervient cette grandeur, caractérisé en ce qu'il comporte les étapes suivantes pour l'entité :

- générer un exposant k aléatoire de longueur N bits, N étant égal à n+b bits,
- calculer le poids de Hamming C de cet exposant et le comparer à une valeur h fixée au préalable,
- vérifier si la valeur aléatoire k remplit la condition $C \geq h$
- rejeter la valeur aléatoire k dans le cas ou le poids de Hamming est inférieur à h et recommencer la génération de nouveaux exposants jusqu'à l'obtention d'un exposant satisfaisant cette condition,
- ou conserver cette valeur dans le cas contraire,
- calculer l'expression $g^k$modp à partir de la valeur conservée,
- utiliser cette expression dans un échange de signaux électroniques avec l'autre entité.

L'invention a également pour objet un procédé de cryptographie à clé publique basé sur le logarithme discret faisant intervenir le calcul de la grandeur $g^k$modp où p est un nombre premier appelé module, k un nombre aléatoire habituellement de longueur n bits et g un entier appelé base, dans lequel une entité E réalise des opérations d'authentification et/ou de signature et/ou de chiffrement, comprenant des échanges de signaux avec une autre entité dans lesquels interviennent plusieurs grandeurs de ce type, caractérisé en ce qu'il comporte les étapes suivantes pour l'entité :

- générer un ensemble d'exposants aléatoires $k_j$ de n bits de poids $a_i$ s'exprimant par l'expression :

$$k_j = \Sigma a_i 2^i$$

- calculer en parallèle les puissances de $g^{2^i}$ tout en combinant les exposants de sorte que les puissances de g déjà calculées pour un exposant servent à d'autres exposants dans lesquels elles interviennent,
- pour chaque $k_j$ donné, calculer les puissances de g non encore calculées et regrouper toutes ces puissances pour obtenir l'expression $g^{kj}$ modp désirée,
- utiliser ces expressions dans un échange de signaux avec l'autre entité.

Selon un premier mode de réalisation les étapes de calcul en parallèle et de regroupement comportent les opérations suivantes :

- combiner les exposants deux par deux pour obtenir des exposants $k_c$ reflet de leur parties communes et réitérer les combinaisons sur le résultat de combinaison obtenu,
- calculer des grandeurs $G_{kc}$ pour chaque valeur de $k_c$ telle que :

$$G_{kc} = g^{kc}modp$$

- combiner un exposant $k_j$ à l'exposant $k_c$ obtenu pour la combinaison à laquelle cet exposant appartient de manière à éliminer les parties communes et ne conserver que les parties différentes,
- définir des exposants $k'_j$ reflet des parties différentes entre un exposant $k_j$ donné et un exposant $k_c$ donné,
- calculer des grandeurs $G_{k'j}$ telles que :

$$G_{k'j} = g^{k'j}modp$$

- déterminer les expressions $G_{kj}$modp en opérant des multiplications entre les grandeurs $Gk_c$ obtenues à chaque itération.

Dans un deuxième mode de réalisation, les étapes de calcul en parallèle et de regroupement comportent les opérations suivantes :

- combiner les exposants entre-eux de manière à former tous les sous-ensembles de combinaisons possibles d'exposants possédant des parties communes,
- définir des exposants $k_c$ reflet des parties communes, pour chaque sous-ensemble de combinaison tels que les bits non-nuls de poids donné correspondent aux bits non-nuls de même poids de la combinaison considérée,
- calculée des grandeurs $G_{kc}$ pour chaque valeur de $k_c$ telles que : $G_{kc} = g^{kc} \bmod p$
- combiner chaque exposant $k_j$ avec tous les exposants $k_c$ obtenus pour chaque sous-ensemble de combinaison auquel cet exposant $k_j$ appartient de manière à éliminer les parties communes et ne conserver que les parties différentes,
- définir des exposants $k'_j$ reflet des parties différentes entre un exposant $k_j$ donné et un exposant $k_c$ donné,
- calculer des grandeurs $G_{k'j}$ telles que :

$$G_{k'j} = g^{k'j} \bmod p$$

- déterminer les expressions $g^{kj} \bmod p$ en opérant une multiplication entre les grandeurs $G'_{kj}$ et $G_{kc}$ pour chaque $k_j$.

Selon un autre objet de l'invention, les combinaisons permettant d'obtenir les parties communes entre les exposants sont réalisés par des jonctions logiques "ET".

Selon un autre objet de l'invention, les combinaisons permettant d'obtenir les parties différentes sont réalisées par des fonctions logiques "OU-exclusif".

D'autres particularités et avantages de l'invention apparaîtront à la lecture de la description qui est faite et qui est donnée à titre d'exemple illustratif et non limitatif et en regard des dessins qui représentent :

- la figure 1, un schéma de principe d'un système apte à mettre en oeuvre l'invention,

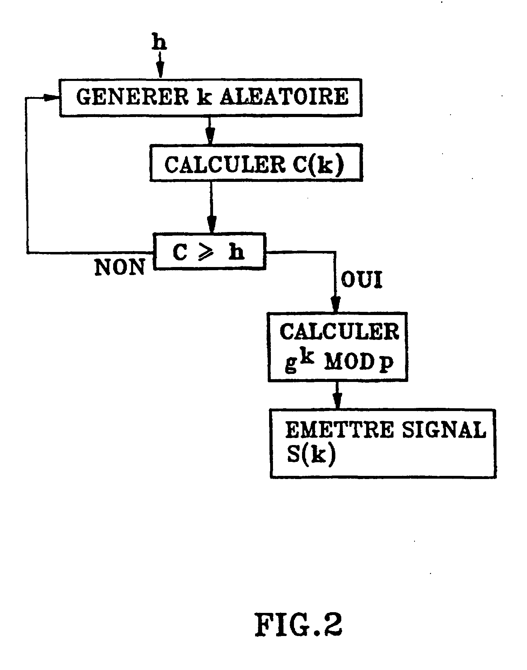

- la figure 2, un schéma fonctionnel représentant les étapes essentielles du procédé dans une première application,
- la figure 3, un schéma fonctionnel représentant les étapes essentielles du procédé dans une deuxième application selon un premier mode de réalisation,
- la figure 4, un schéma fonctionnel, représentant les étapes essentielles du procédé dans la deuxième application, selon un deuxième mode de réalisation,

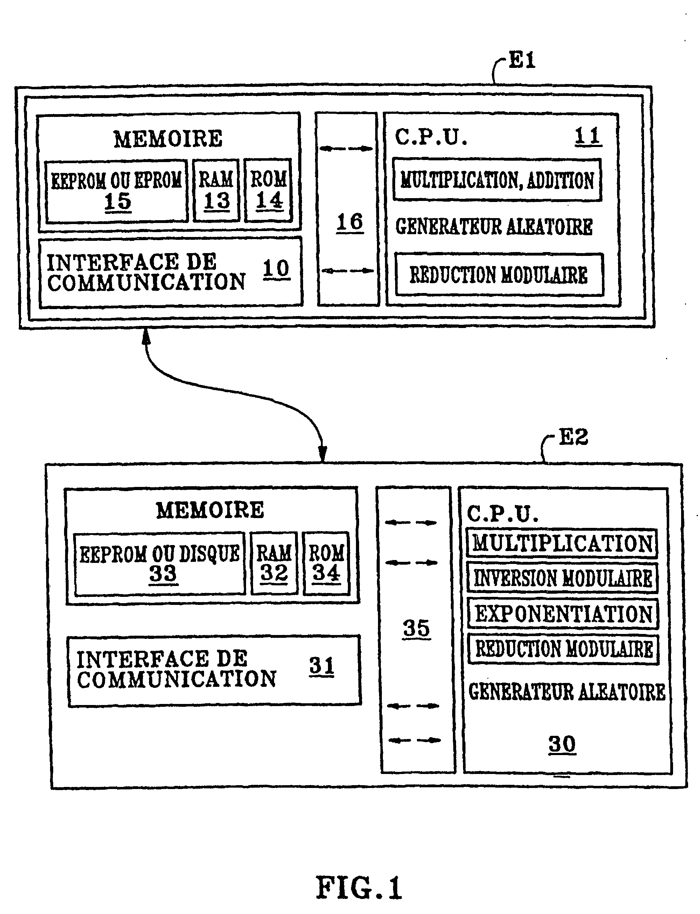

On a représenté sur la figure 1, un schéma de principe d'un système de mise en oeuvre du procédé de cryptographie objet de l'invention.

Ce système est formée d'une entité E1 désirant effectuer des échanges de signaux électroniques avec au moins une autre entité E2. les deux entités sont munies respectivement d'une unité de traitement (CPU) 11, 30, d'une interface de communication, d'une mémoire vive (RAM) 13, 32 et/ou d'une mémoire non inscriptible (ROM) 14, 34 et/ou d'une mémoire non volatile inscriptible ou réinscriptible (EPROM ou EEPROM) 15, 33 et un bus d'adresses, de données, de contrôle 16, 35.

L'unité de commande de traitement et/ou la ROM contiennent des programmes ou des ressources de calcul correspondant à l'exécution des étapes de calcul intervenant dans le procédé objet de l'invention, c'est-à-dire lors d'une session d'authentification ou lors de la génération d'une signature électronique ou lors du cryptage de signaux électroniques à transmettre à l'autre entité.

L'unité de traitement ou la ROM possèdent les ressources nécessaires à des multiplications, additions et réductions modulaires.

De même que l'unité de traitement et/ou la ROM comportent les fonctions de cryptographies utilisées propres à chaque algorithme de cryptographie et les paramètres g et p. Les exposants $k_j$ pourront être chargés au préalable dans une mémoire réinscriptible par l'autorité ou, générés au fur et à mesure à partir d'un générateur aléatoire et d'une valeur aléatoire source ko secrète. L'entité E1 possède en outre la clé secrète x.

L'invention s'applique tout particulièrement aux système à cryptographie mis en place dans le domaine bancaire où une grande sécurité est requise lors de transactions opérées sur les comptes. C'est aussi le cas où l'on désire authentifier l'envoi de messages transmis sous forme de signaux électroniques d'une autre entité. C'est aussi le cas où l'on a besoin de signer des messages lors d'échanges de signaux avec une autre entité.

En pratique, l'entité désireuse de réaliser une transaction pourra être, par exemple, une carte à circuit intégré telle qu'une carte à puce et l'entité destinatrice sera alors un terminal bancaire.

La suite de la description va être faite dans le cadre de l'application du procédé à la signature de messages numériques, étant bien entendu que l'invention s'applique à tout système de cryptographie basé sur un algorithme discret.

Le procédé selon l'invention propose une première solution pour diminuer considérablement le nombre de multiplications particulièrement adapté au cas où l'on a un environnement où la place mémoire est faible.

Dans ce cas, le principe est de produire des exposants $k_j$ "creux" en ce sens que le poids de Hamming sera choisi le plus faible possible, tout en conservant bien entendu le caractère aléatoire à ces exposants.

Pour cela, le procédé consiste à générer des exposants $k_j$ soit au fur et à mesure du besoin soit au préalable à tout échange. Bien sûr dans ce cas, ils seront mémorisés. Les exposants générés n'ont pas une longueur de n bits mais une longueur supérieure n+b bits et remplissent une condition définie dans la suite.

Lorsqu'un exposant k de n+b bits est généré le procédé consiste ensuite à calculer le poids de Hamming C de cet exposant puis à le comparer à une valeur h fixée au préalable.

Si à l'issue de la comparaison C≥h alors l'exposant est retenu et va être utilisé par l'entité qui va alors calculer l'expression $g^k$modp et utiliser cette expression dans l'envoi de signaux numériques dans lesquels cette expression sera utilisée comme signature par exemple.

Dans le cas où le paramètre C ne remplit pas la condition requise, l'exposant k correspondant est rejeté, un nouvel exposant est généré, l'étape de vérification de la condition est recommencée jusqu'à obtention d'un exposant k remplissant cette condition.

Ainsi cette solution permet d'avoir à réaliser moins de multiplication tout en conservant le même niveau de sécurité que si l'on avait des exposants de taille plus réduite.

Selon un exemple particulier, permettant de réduire au maximum le nombre de multiplications on choisira C = h.

En pratique, pour un exposant de taille n + b bits (avec n = $\log_2$ p) dont le poids de Hamming est h, pour avoir le même nombre de combinaisons que lorsque l' exposant est de n bits, alors les relations suivantes doivent êtres vérifiées :

$$2^n \leq C^h_{n+b}$$

et( N + b)/2 + h ≤ n (condition qui permet de réduire le nombre de calcul à effectuer).
c'est à dire $2^n \leq$ (n+b) !/ (n + b - h)! h!
et

$$b+2h \leq n$$

Les nombres b et h que l'on se fixe sont obtenus en résolvant cette double inéquation pour un n donné (n=160 par exemple).

A titre illustratif les résultats du procédé selon l'invention ont été comparés aux méthodes connues.

Dans le cas de l'algorithme de Shnorr où n = 160 bits, et dans le cas de l'algorithme de El Gamal où n = 512 bits. Ces résultats sont indiqués dans le tableau ci-dessous.

| variant ⇨<br><br>effort ⇩ | Schnorr | El Gamal<br>Temps de<br>calcul | El Gamal<br>Espace de<br>mémoire |
|---|---|---|---|
| multiplications | 62(h) | 187(h) | 199(h) |
| CARRE | 87(b=15) | 279(b=52) | 273(b=35) |
| EFFORT | 149 | 469 | 472 |
| GAIN | 6,8% | 9,4% | 7,8% |

La contrainte mise sur l'espace des signatures couvert par des exposants de n bits peut être réduite par un facteur α dépendant du niveau de sécurité que l'on désire obtenir.

Les paramètres n, h et b doivent alors remplir la condition (1)

$$(1) \qquad 2^{n-\alpha} \leq (n+b)!/(n+b-h)!h!$$

tout en conservant la possibilité de générer les mêmes signatures à partir de différents aléas de taille (n + b) bits.

En pratique $2^{80}$ est assez pour contrer les différentes attaques possibles et donc n-$\alpha$ = 100 est une valeur tout à fait acceptable.

| variant ⇨<br><br>effort ⇩ | Exposant<br>creuse<br>temps<br>de calcul | Expossant<br>creux<br>place<br>mémoire | carré-<br>multiplié<br>simple |
|---|---|---|---|
| multiplications | 37(h) | 49(h) | n/2 |
| carrés | n/2+7<br>(b=14) | n/2+2<br>(b=4) | n/2 |
| Total | n/2+44 | n/2+51 | n |

Cette variante d'exécution est d'autant plus interressante que le coût (en temps de calcul) d'un carré est souvent moindre que celui d'une multiplication modulaire.

En général on obtient :

s/2 ≤ m ≤ s, s étant le nombre de carrés à calculer et m le nombre de multiplications, les deux cas extrêmes étant m = s et m = 2s.

On a représenté des résultats comparatifs pour ces deux cas extrêmes dans le tableau suivant :

| variant⇨<br><br>effort ⇩ | exposant<br>creux<br>temps de<br>calcul | exposant<br>creux<br>place<br>mémoire | carré<br>multiplié<br>simple | GAIN |
|---|---|---|---|---|
| Schnorr<br>(m=2s) | 124 | 131 | 160 | 22.5% |
| El Gamal<br>(m=2s) | 300 | 307 | 512 | 41% |
| Schnorr<br>(m=s) | 204 | 211 | 240 | 15% |

| El Gamal (m=8) | 556 | 563 | 728 | 24% |
|---|---|---|---|---|

On constate que le gain obtenu lorsque l'on applique le procédé aux schémas de Shnorr et El Gamal est très important par rapport à la méthode du carré-multiplié simple et même dans le cas où l'on considère que le coût d'un carré est le même que celui d'une multiplication.

Selon un autre mode de réalisation, le procédé s'applique tout particulièrement à des systèmes n'ayant pas de contrainte particulière concernant la place mémoire.

Dans ce mode de réalisation, on procède au calcul des différentes puissances de g en parallèle afin de ne calculer les carrés qu'une seule fois, tout en combinant les exposants afin de ne pas effectuer plusieurs fois le même calcul.

Pour bien comprendre l'invention, on va décrire le cas où l'on a effectué le calcul de deux puissances.

soit $k_j = \Sigma a_i 2^i$, kj étant tiré aléatoirement (c'est-à-dire généré à partir d'un générateur aléatoire)

$$\text{soit } k_k = K_j = \Sigma b_i 2^i$$

Selon le procédé on combine les exposants $k_j$ et $k_k$ de manière à définir un exposant $k_c$ tel que :

$$k_c = \Sigma a_i b_i 2^i \text{ reflète des parties communes entre } k_j$$

et $k_k$. Les coefficients $a_i$ sont, soit 1 soit 0.

L'exposant $k_c$ correspond à la partie commune des exposants $k_j$ et $k_k$ c'est-à-dire si $k_j = 1 \times 2^{10} + ... + 0 + 1 \times 2^o$ et $k_k = 1 \times 2^{10} + 0 + 0 ... + 1 \times 2^0$ $k_c = 1 \times 2^{10} + 0 + ... + 1 \times 2^0$.

Selon le procédé on détermine donc ainsi l'exposant k noté $k_c$. au moyen d'une fonction logique ET.

on procède ensuite à une deuxième combinaison consistant à déterminer les parties distinctes entre l'exposant $k_j$ et l'exposant $k_c$. On recherche également les parties distinctes entre l'exposant $k_k$ et l'exposant $k_c$.

On va noter $k_j \oplus k_c$ et $k_k \oplus k_c$ ces combinaisons qui sont réalisées pour des OU-exclusifs.

On calcule en parallèle les grandeurs suivantes :

$$G_{kj} = g^{kj \oplus kc} \text{modp}$$

$$G_{kk} = g^{kk \oplus kc} \text{modp}$$

$$G_{kc} = g^{kc} \text{modp}$$

Pour obtenir $g^{kj}$modp et $G^{kk}$modp il suffit de réaliser les opérations :

1) $G_{kj} \times Gk_c$modp
2) $Gk_k \times Gk_c$modp

Lorsque l'on a, comme l'exemple qui vient d'être donné deux puissances, on effectue en moyenne environ 3n/4 multiplications au lieu de n multiplications. Le gain est de 25%;

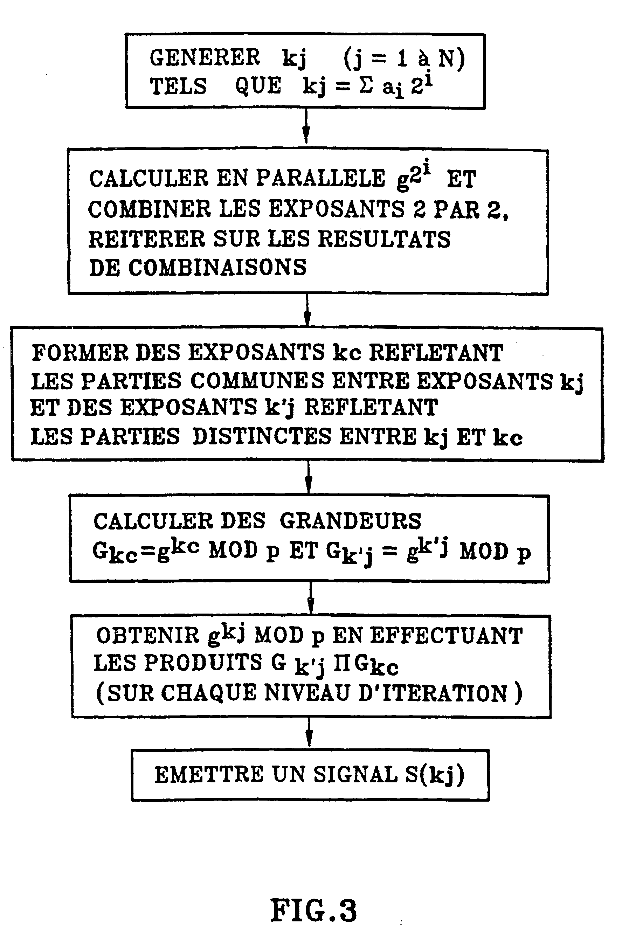

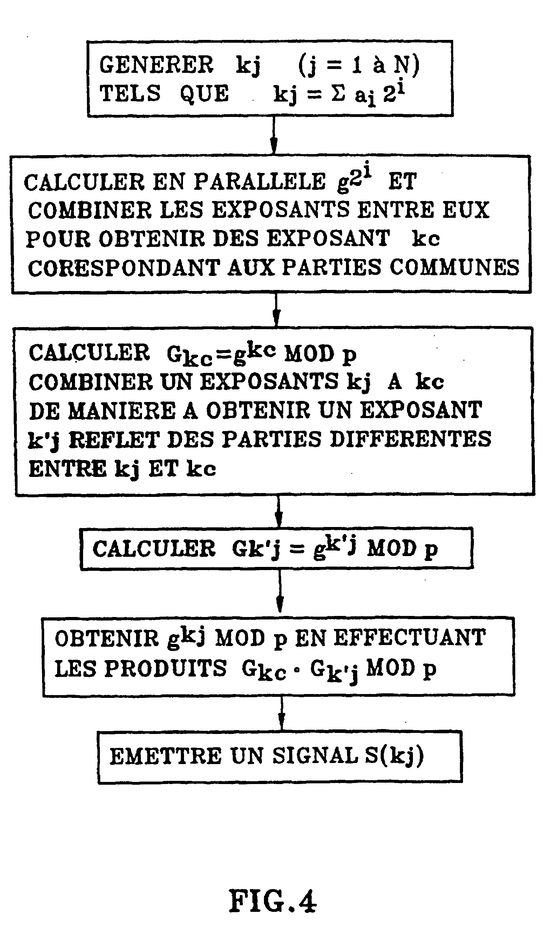

Le procédé selon l'invention peut être généralisé à un plus grand nombre de combinaisons d'exposants. Cette généralisation peut en outre être implantée selon deux modes de réalisation illustrés par les schémas fonctionnels donnés sur les figures 3 et 4.

Dans ce cas, l'invention s'applique tout particulièrement aux cas où l'on a besoin de générer un grand nombre de signatures.

Selon le premier mode de réalisation, on réalise des combinaisons d'exposants deux par deux suivant une arborescence telle que représentée par le tableau ci-dessous :

| $k_j$ | a1 | a2 | a3 | a4 |
|---|---|---|---|---|
| $k_c$ | b1 = a1.a2 | | b2 = a3.a4 | |
| | c1 = b1.b2 | | | |

Ces combinaisons permettent tout comme l'exemple décrit précédemment, de fournir des exposants $k_c$ reflet des parties commune entre les exposants $k_j°$.

Pour simplifier l'écriture, les exposants $k_j$ sont nommés $a_1$, $a_2$, $a_3$, $a_4$.

Les exposants $k_c$ sont nommés au niveau -1 de l'arbre, $b_1$ et $b_2$ et au niveau -2 de l'arbre par $c_1$.

Les combinaisons $a_1.a_2$, $a_3. a_4$ sont réalisées par une fonction logique ET.

On réitère les combinaisons à chaque niveau de l'arbre ainsi constitué. le nombre de multiplications diminue au fur et à mesure que l'on s'enfonce dans l'arbre du fait de la simple répartition statistique des bits. L'effort de calcul à réaliser est minoré par n/3 multiplications.

Comme cela a été décrit précédemment, on détermine des grandeurs $G_{kc}$ à chaque niveau.

Ainsi on obtiendra :

$$G_{a1} = g^{a1 \oplus b1} \bmod p$$

$$G_{a2} = g^{a2 \oplus b1} \bmod p$$

$$G_{b1} = g^{b1} \bmod p$$

$$G_{b1} = g^{b1 \oplus c1} \bmod p \text{ soit } G_{b1} = G_{b1} \cdot {}^G c_1 \bmod p$$

$$G_{b2} = g^{b2 \oplus c1} \bmod p \text{ soit } G_{b2} = G_{b2} \cdot {}^G c_1 \bmod p$$

$$G_{c1} = g^{c1} \bmod p$$

$$G^{a1} \bmod p = G_{a_1} \times G_{b_1} \bmod p = G_{a_1} \times G_{b_1} \times G_{c_1} \bmod p$$

En pratique, $g^{a1} \bmod p$ sera obtenu par le produit $G_{a_1} \times G_{b_1} \bmod p$ et $g^{a2} \bmod p$ sera obtenu par le produit $G_{a_2} \times G_{b_1} \times G_{c1} \bmod p$.

Selon un deuxième mode de réalisation on combine les exposants de manière à former tous les sous-ensembles de combinaison possibles soit par exemple si l'on a comme exposant $k_j$ : a, b, c, on formera les combinaisons ab, ac, bc, abc.

On réalise donc des combinaisons permettant de définir les parties communes relatives à ces sous-ensembles en opérant une fonction logique ET entre a et b, a et c, b et c et a, b, c. On définit ainsi un exposant $k_c$ pour chaque sous-ensemble obtenu.

On peut calculer en parallèle toutes les grandeurs $G_{kc} = g^{kc} \bmod p$ pour lesquelles $k_c$ ont peu de bits à 1 par rapport aux k initiaux et donc pour lesquelles le calcul modulaire est rapide.

Puis on effectue un autre type de combinaison consistant à éliminer les parties communes entre un exposant et les combinaisons précédentes.

Ces combinaisons sont réalisées au moyen de fonctions logiques OU-exclusif. Ainsi, on obtient suivant l'exemple donné :

ka = a xor abc xor ac xor ab
kb = b xor abc xor ab xor bc
kc = c xor abc xor ac xor bc

On peut ensuite calculer des grandeurs $G_{k'j} = g^{kj}$ modp pour lesquelles les $k'_j$ ont encore moins de bits à 1 que les $k_c$ initiaux et pour lesquelles les modifications modulaires sont encore plus rapides.

Pour finir les expressions $g^{kj}$modp sont obtenues par $k_j$.

Dans le cas de la génération de N signatures obtenues par ce deuxième mode de réalisation, l'effort de calcul tendra vers

n/N carrés + $n(2^N-1)/N2^N + (2^{N-1}-1)$ multiplications.

Le tableau qui suit permet de donner des résultats de comparaisons avec les méthodes connues telles que le carré-multiplié, le carré mutliplié en parallèle et l'invention.

| Méthodes Temps de effort | Carré multiplié | Carré muliplié parallèle | Combinaison d'exposant arbre binaire |
|---|---|---|---|
| Carrés | N(n-1) | n-1 | n-1 |
| Multiplication | N(n/2-1) | N(n/2-1) | Nn/3 |
| TOTAL | N(3n/2-2) | N(n/2-1)+n-1 | Nn/3+n-1 |
| Effort pour N>>n | 100% | 33% | 22% |

Le premier mode de réalisation donné (regroupement arborescent) dans le cas de l'application à la génération de N signatures est peu coûteuse en place mémoire.

Pour un arbre binaire à 4 exposant on aura besoin de 8 registres de $\log_2(p)$ bits pour les calculs.

Le deuxième mode de réalisation donné (N regroupements) est très peu coûteux en temps de calcul car elle est optimale en nombre de multiplication. Pour 3 exposants on aura besoin de 8 registres de $\log_2(p)$ bits pour les calculs.

**Revendications**

1. Procédé de cryptographie à clé publique basé sur le logarithme discret faisant intervenir le calcul de la grandeur $g^k$modp où p est un nombre premier appelé module, k un nombre aléatoire et g un entier appelé base, dans lequel une entité E réalise des opérations d'authentification et/ou de signature et/ou de chiffrement, comprenant des échanges de signaux avec une autre entité dans lesquels intervient cette grandeur, ledit procédé générant un exposant k aléatoire de longueur N bits, N étant égal à n+b bits **avec n égal à $\log_2 p$**, n et b étant des entiers, **caractérisé en ce qu'**il comporte les étapes suivantes pour l'entité:

   - calculer le poids de Hamming C de cet exposant et le comparer à une valeur h fixée au préalable ;
   - vérifier si la valeur aléatoire k remplit la condition: C > _ h ;
   - rejeter la valeur aléatoire k dans le cas où le poids de Hamming est inférieur de h et recommencer la génération de nouveaux exposants jusqu'à obtention d'un exposant satisfaisant cette condition
   - ou conserver cette valeur dans le cas contraire ;
   - calculer l'expression $g^k$modp à partir de la valeur conservée ;
   - utiliser cette expression dans les échanges de signaux avec l'autre entité.

2. Procédé selon la revendication 1, **caractérisé en ce que** la condition à remplir est c = h.

3. Procédé de cryptographie à clé publique basé sur le logarithme discret faisant intervenir le calcul de la grandeur $g^k$modp ou p est un nombre premier appelé module, k un nombre aléatoire et g un entier appelé base, dans lequel une entité E réalise des opérations d'authentification et/ou de signature et/ou de chiffrement, comprenant des échanges de signaux avec une autre entité dans lesquels intervient cette grandeur, **caractérisé en ce qu'**il comporte les étapes suivantes :

   - générer un ensemble d'exposants aléatoires $k_j$ de n bits de poids $a_i$ s'exprimant par l'expression

$$k_j = \Sigma a_i 2^i \; ;$$

   - calculer en parallèle les puissance de $g2^i$ tout en combinant les exposants de sorte que les puissances de g calculées pour un exposant servent à d'autres exposants dans lesquels elles interviennent ;
   - pour chaque $k_j$ donné, calculer les puissances de g non encore calculées et regrouper toutes ces puissances pour obtenir l'expression gk$_j$modp désirée ;

- utiliser ces expressions dans un échange de signaux avec l'autre entité.

4. Procédé selon la revendication 3, **caractérisé en ce que** les étapes de calcul en parallèle et de regroupement comportent les opérations suivantes :

- combiner les exposants deux par deux pour obtenir des exposants $k_c$ reflet de leurs parties communes et réitérer les combinaisons sur le résultat de combinaison obtenu ;
- calculer les grandeurs $G_{kc}$ pour chaque valeur de $k_c$ telle que :

$$G_{kc} = g^{kc}modp ;$$

- combiner un exposant $k_j$ à l'exposant $k_c$ obtenu pour la combinaison à laquelle cet exposant appartient de manière à éliminer les parties communes et ne conserver que les parties différentes ;
- définir des exposants $k_{,j}$ reflet des parties différentes entre un exposant $k_j$ donné et un exposant $k_c$ donné ;
- calculer des grandeurs $G_{k,j}$ telles que :

$$G_{k,j} = gmodp ;$$

- déterminer les expressions $G_{kj}$modp en opérant des multiplications entre les grandeurs $G_{kc}$ obtenues à chaque itération.

5. Procédé selon la revendication 3, **caractérisé en ce que** les étapes de calcul en parallèle et de regroupement comportent les opérations suivantes :

- combiner les exposants entre eux de manière à former tous les sous-ensembles de combinaisons possibles d'exposants possédant des parties communes ;
- définir des exposants $k_c$ reflet des parties communes, pour chaque sous-ensemble de combinaison tels que les bits non-nuls de poids donné correspondent aux bits non-nuls de même poids de la combinaison considérée ;
- calculée des grandeurs $G_{kc}$ pour chaque valeur de $k_c$ telles que : $G_{kc}= g^{kc}modp$ ;
- combiner chaque exposant $k_j$ avec tous les exposants $k_c$ obtenus pour chaque sous-ensemble de combinaison auquel cet exposant $k_j$ appartient de manière à éliminer les parties communes et ne conserver que les parties différentes ;
- définir des exposants $k'_j$ reflet des parties différentes entre un exposant $k_j$ donné et un exposant $k_c$ donné ;
- calculer des grandeurs $G_{k,j}$ telles que :

$$G_{k,j}=g^{k,j}modp ;$$

- déterminer les expressions $g^{kj}$modp en opérant une multiplication entre les grandeurs $G'_{kj}$ et $G_{kc}$ pour chaque $k_j$.

**Patentansprüche**

1. Kryptographisches Verfahren mit öffentlichem Schlüssel, basierend auf dem die Berechnung der Größe $g^k$modp einbringenden diskreten Logarithmus, in dem p eine Modul genannte Primzahl ist, k eine zufällige Zahl und g eine Basis genannte ganze Zahl, in der eine Einheit E die Authentifizierungsoperationen und / oder Unterschrifts- und / oder Chiffrierungsoperationen realisiert, die die Signalaustausche mit einer anderen Einheit umfassen, in denen diese Größe auftritt, wobei das genannte Verfahren einen zufälligen Exponenten k der Länge von N Bits generiert, wobei N gleich n+1 Bits **mit n gleich log2 p** ist, wobei n und b ganze Zahlen sind, **dadurch gekennzeichnet, dass** es für die Einheit die folgenden Stufen umfasst:

- Berechnen des Hamming-Gewichts C dieses Exponenten und Vergleich mit einem zuvor festgelegten Wert h;
- Überprüfung, ob der zufällige Wert k die Bedingung: C > _ h erfüllt:

- Ablehnen des zufälligen Wertes k für den Fall, dass das Hamming-Gewicht unter h liegt und erneute Erzeugung neuer Exponenten bis zum Erhalt eines diese Bedingung zufriedenstellenden Exponenten
- oder Beibehaltung dieses Wertes im gegenteiligen Fall;
- Berechnung des Ausdrucks $g^k modp$ ausgehend vom beibehaltenen Wert;
- Verwenden dieses Ausdrucks in den Signalaustauschen mit der anderen Einheit.

2. Verfahren gemäß Anspruch 1, **dadurch gekennzeichnet, dass** die zu erfüllende Bedingung c = h ist.

3. Kryptographisches Verfahren mit öffentlichem Schlüssel, basierend auf dem die Berechnung der Größe $g^k modp$ einbringenden diskreten Logarithmus, in dem p eine Modul genannte Primzahl ist, k eine zufällige Zahl und g eine Basis genannte ganze Zahl, in der eine Einheit E die Authentifizierungsoperationen und / oder Unterschrifts- und / oder Chiffrierungsoperationen realisiert, die die Signalaustausche mit einer anderen Einheit umfassen, in denen diese Größe auftritt, **dadurch gekennzeichnet, dass** es die folgenden Stufen umfasst:

- Erzeugen einer Struktur zufälliger Exponenten $k_j$ mit n Bits mit einem Gewicht von $a_i$, ausgedrückt durch den Ausdruck

$$k_j = \Sigma a_i 2^i;$$

- parallel die Potenz $g2^i$ unter gleichzeitiger Kombination der Exponenten derart berechnen, dass die für einen Exponenten von g berechneten Potenzen anderer Exponenten dienen, in denen sie auftreten;
- für jedes vorgegebene $k_j$ die noch nicht berechneten Potenzen von g berechnen und alle diese Potenzen zusammenfassen, um den gewünschten Ausdruck $gk_j modp$ zu erhalten;
- verwenden dieser Ausdrücke in einem Signalaustausch mit der anderen Einheit.

4. Verfahren gemäß Anspruch 3, **dadurch gekennzeichnet, dass** die parallelen und zusammenführenden Berechnungsstufen die folgenden Operationen umfassen:

- Kombinieren der Exponenten jeweils zu zweit, um die ihre gemeinsamen Teile wiedergebenden Exponenten $k_c$ zu erhalten und Wiederholen der Kombinationen mit dem erhaltenen Ergebnis der Kombination;
- Berechnung der Größen $G_{kc}$ für jeden Wert $k_c$, wie z. B.:

$$G_{kc} = g^{kc} modp;$$

- Kombinieren eines Exponenten $k_j$ mit dem für die Kombination erhaltenen Exponenten $k_c$, zu der dieser Exponent gehört, so dass die gemeinsamen Teile eliminiert werden und Beibehalten nur der unterschiedlichen Teile;
- Definieren der die unterschiedlichen Teile zwischen einem vorgegebenen Exponenten $k_j$ und einem vorgegebenen Exponenten $k_c$ wiedergebenden unterschiedlichen Exponenten k, j;
- Berechnen der Größen $G_{k, j}$, wie z. B.:

$$G_{k, j} = gmodp;$$

- Bestimmen der Ausdrücke $G_{kj} modp$ durch Durchführen der Multiplikationen zwischen den bei jeder Iteration erhaltenen Größen $G_{kc}$.

5. Verfahren gemäß Anspruch 3, **dadurch gekennzeichnet, dass** die parallelen und zusammenführenden Berechnungsstufen die folgenden Operationen umfassen:

- Kombinieren der Exponenten untereinander, so dass alle Unterstrukturen möglicher, die gemeinsamen Teile aufweisenden Exponentenkombinationen gebildet werden;
- Definieren der die gemeinsamen Teile wiedergebenden Exponenten $k_c$ für jede Unterstruktur-Kombination, so dass die Bit ungleich Null mit einem vorgegebenen Gewicht den Bits ungleich Null mit demselben Gewicht der betrachteten Kombination entsprechen;
- Berechnen der Größen $G_{kc}$ für jeden Wert von $k_c$, wie z. B.: $G_{kc} = g^{kc} modp$;

- Kombinieren jedes Exponenten $k_j$ mit allen für jede Unterstruktur-Kombination erhaltenen Exponenten $k_c$, in der dieser Exponent $k_j$ derart gehört, dass die gemeinsamen Teile eliminiert werden und nur die unterschiedlichen Teile beibehalten;
- Definieren der die unterschiedlichen Teile zwischen einem vorgegebenen Exponenten $k_j$ und einem vorgegebenen Exponenten $k_c$ wiedergebenden Exponenten $k'_j$;
- Berechnen der Größen $G_{k,\,j}$, wie z. B:.

$$G_{k,\,j} = g^{k,\,j} \bmod p;$$

Bestimmen der Ausdrücke $g^{kj} \bmod p$ durch Durchführen einer Multiplikation zwischen den Größen $G'_{kj}$ und $G_{kc}$ für jedes $k_j$.

**Claims**

1. Public key cryptography method based on the discrete logarithm involving calculation of the quantity $g^k \bmod p$ where p is a prime number known as the modulus, k is a random number and g is an integer known as the base, in which an entity E carries out authentication and/or signature and/or encoding operations, comprising signal exchanges with another entity involving this quantity, said method generating a random exponent k having a length of N bits, N being equal to n+b bits **with n equal to $\log_2 p$**, n and b being integers, **characterized in that** it comprises the following steps for the entity:

   - calculating the Hamming weight C of this exponent and comparing it with a value h defined beforehand;
   - verifying whether the random value k satisfies the condition $C \geq h$;
   - rejecting the random value k if the Hamming weight is less than h and recommencing the generation of new exponents until an exponent that satisfies this condition is obtained,
   - or retaining this value if not;
   - calculating the expression $g^k \bmod p$ on the basis of the retained value;
   - using this expression in the signal exchanges with the other entity.

2. Method according to Claim 1, **characterized in that** the condition to be satisfied is C = h.

3. Public key cryptography method based on the discrete logarithm involving calculation of the quantity $g^k \bmod p$ where p is a prime number known as the modulus, k is a random number and g is an integer known as the base, in which an entity E carries out authentication and/or signature and/or encoding operations, comprising signal exchanges with another entity involving this quantity, **characterized in that** it comprises the following steps:

   - generating a set of random exponents $k_j$ of n bits of weight $a_i$, this being expressed by the expression

   $$k_j = \Sigma a_i 2^i;$$

   - calculating in parallel the powers of $g2^i$ while combining the exponents so that the powers of g calculated for one exponent can be used for other exponents in which they are involved;
   - for each given $k_j$, calculating the powers of g that have not yet been calculated and regrouping all these powers so as to obtain the desired expression $g^{k_j} \bmod p$;
   - using these expressions in a signal exchange with the other entity.

4. Method according to Claim 3, **characterized in that** the steps of parallel calculation and regrouping comprise the following operations:

   - combining the exponents two by two so as to obtain exponents $k_c$ that are a reflection of their common parts and reiterating the combinations on the combination result obtained;
   - calculating the quantities $G_{kc}$ for each value of $k_c$ such that:

   $$G_{kc} = g^{kc} \bmod p;$$

- combining an exponent $k_j$ with the exponent $k_c$ obtained for the combination to which this exponent belongs so as to eliminate the common parts and retain only the different parts;
- defining exponents $k_{\cdot j}$ that are a reflection of the different parts between a given exponent $k_j$ and a given exponent $k_c$;
- calculating quantities $G_{k,j}$ such that:

$$G_{k,j} = \text{gmodp};$$

- determining the expressions $G_{kj}$modp by carrying out multiplications between the quantities $G_{kc}$ obtained at each iteration.

5. Method according to Claim 3, **characterized in that** the steps of parallel calculation and regrouping comprise the following operations:

- combining the exponents so as to form all the possible subsets of combinations of exponents having common parts;
- defining exponents $k_c$ that are a reflection of the common parts, for each combination subset, so that the non-zero bits of given weight correspond to the non-zero bits of the same weight of the combination considered;
- calculating quantities $G_{kc}$ for each value of $k_c$ such that: $G_{kc} = g^{kc}$modp;
- combining each exponent $k_j$ with all the exponents $k_c$ obtained for each combination subset to which this exponent $k_j$ belongs so as to eliminate the common parts and retain only the different parts;
- defining exponents $k'_j$ that are a reflection of the different parts between a given exponent $k_j$ and a given exponent $k_c$;
- calculating quantities $G_{k,j}$ such that:

$$G_{k,j} = g^{k,j}\text{modp};$$

- determining the expressions $g^{kj}$modp by carrying out a multiplication between the quantities $G'_{kj}$ and $G_{kc}$ for each $k_j$.

**FIG.1**

**h**

GENERER **k** ALEATOIRE

CALCULER C(**k**)

C ⩾ **h**

NON

OUI

CALCULER
$g^k$ MOD p

EMETTRE SIGNAL
S(**k**)

# FIG.2

GENERER kj (j = 1 à N)
TELS QUE $kj = \Sigma a_i 2^i$

CALCULER EN PARALLELE $g^{2^i}$ ET
COMBINER LES EXPOSANTS 2 PAR 2,
REITERER SUR LES RESULTATS
DE COMBINAISONS

FORMER DES EXPOSANTS kc REFLETANT
LES PARTIES COMMUNES ENTRE EXPOSANTS kj
ET DES EXPOSANTS k'j REFLETANT
LES PARTIES DISTINCTES ENTRE kj ET kc

CALCULER DES GRANDEURS
$G_{kc} = g^{kc}$ MOD p ET $G_{k'j} = g^{k'j}$ MOD p

OBTENIR $g^{kj}$ MOD p EN EFFECTUANT
LES PRODUITS $G_{k'j} \Pi G_{kc}$
(SUR CHAQUE NIVEAU D'ITERATION )

EMETTRE UN SIGNAL S(kj)

# FIG.3

GENERER kj (j = 1 à N)
TELS QUE kj = $\Sigma\ a_i\ 2^i$

CALCULER EN PARALLELE $g^{2^i}$ ET
COMBINER LES EXPOSANTS ENTRE EUX
POUR OBTENIR DES EXPOSANT kc
CORESPONDANT AUX PARTIES COMMUNES

CALCULER $G_{kc} = g^{kc}$ MOD p
COMBINER UN EXPOSANTS kj A kc
DE MANIERE A OBTENIR UN EXPOSANT
k'j REFLET DES PARTIES DIFFERENTES
ENTRE kj ET kc

CALCULER $G_{k'j} = g^{k'j}$ MOD p

OBTENIR $g^{kj}$ MOD p EN EFFECTUANT
LES PRODUITS $G_{kc} \cdot G_{k'j}$ MOD p

EMETTRE UN SIGNAL S(kj)

# FIG.4